# EUROPÄISCHE PATENTANMELDUNG

(11) **EP 1 995 486 A2**
(43) Veröffentlichungstag der Anmeldung: **26.11.2008**
(21) Anmeldenummer: 08008816.4
(22) Anmeldetag: 13.05.2008
(51) Int. Cl.: F16D 48/06

(54) **Verfahren und Vorrichtung zum Vermindern von Schaltschlägen in einem Fahrzeugantriebsstrang**

(30) Priorität: 24.05.2007 DE 102007024132
(71) Anmelder: LuK Lamellen und Kupplungsbau Beteiligungs KG, 77815 Bühl (DE)
(72) Erfinder: Uddin, Shafiq, Bishops Tachbrook CV33 9QY Lemington Spa Warwickshire (GB); Song, Inho, CV31 1BU Warwickshire (GB); Yasin, Mohammed, CV1 2NP Coventry (GB); Gallion, Michael, CV34 5PB Warwick (GB)

(57) **Zusammenfassung**

Bei einem Verfahren zum Vermindern von Schaltschlägen in einem mit einer automatisierten Kupplung (12) versehenen Antriebsstrang eines Fahrzeuges wird die Kupplung (12) zum Einlegen eines neuen Gangs eines in dem Antriebsstrang enthaltenen Schalgetriebes (14) voll geöffnet und nach Einlegen des neuen Gangs mit einem vorbestimmten Geschwindigkeitsverlauf durch ihren Greifpunkt hindurch geschlossen.

## Beschreibung

Die Erfindung betrifft ein Verfahren und eine Vorrichtung zum Verhindern von Schaltschlägen in einem mit einer automatischen Kupplung versehenen Antriebsstrang eines Fahrzeugs.

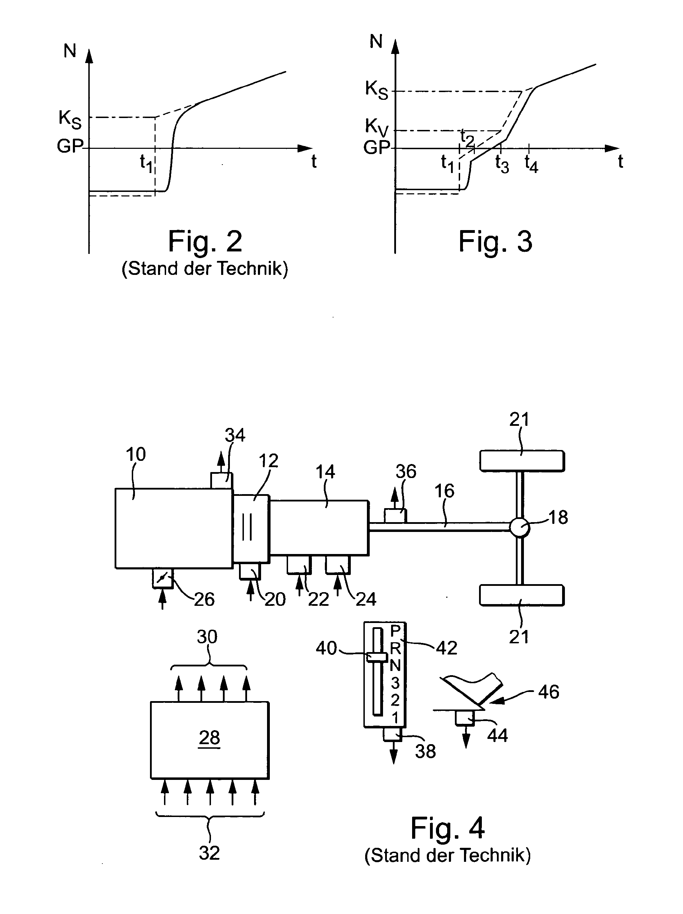

Fig. 2 zeigt schematisch den Aufbau eines an sich bekannten Fahrzeugantriebsstrangs:

Ein Fahrzeugantriebsmotor 10, beispielsweise eine Brennkraftmaschine, ist über eine Kupplung 12 mit einem Getriebe 14 verbunden, dessen Ausgangswelle über eine Kardanwelle 16 und ein Differential 18 Räder 21 eines Fahrzeugs antreibt.

Die Kupplung 12 ist eine automatisierte Kupplung, die mittels eines Aktors 20 betätigbar ist. Das Getriebe 14 ist beispielsweise ein automatisiertes Schaltgetriebe, das von einem Schaltaktor 22 und einem Wählaktor 24 betätigt wird.

Zur Steuerung der genannten Aktoren sowie eines weiteren Aktors 26 zur Betätigung eines Laststellgliedes des Fahrzeugantriebsmotors ist eine elektronische Steuereinrichtung 28 mit einem Mikroprozessor und zugehörigen Speichereinrichtungen vorgesehen, deren Ausgänge 30 den Betrieb der Aktoren 20, 22, 24 und 26 steuern und deren Eingänge 32 mit im Antriebsstrang vorgesehenen Sensoren zum Erfassen von für die Betätigung der Aktoren relevanten Betriebsparametern verbunden sind, beispielsweise einem Drehzahlsensor 34 zum Erfassen der Drehzahl der Ausgangswelle des Antriebsmotors 10, einem Drehzahlsensor 36 zum Erfassen der Drehzahl der Kardanwelle 16, einem Stellungssensor 38, zum Erfassen der Stellung eines Wählhebels 40 einer Fahrprogrammwähleinrichtung 42 und einem Stellungssensor 44 zum Erfassen der Stellung eines Fahrpedals 46.

Aufbau und Funktion der beschriebenen Einheiten sind an sich bekannt und werden daher nicht im Einzelnen erläutert. Abhängig von der Stellung des Wählhebels 40 werden in der elektronischen Steuereinrichtung 28 abgelegte Programme aktiviert, entsprechend denen die Kupplung 12 betätigt wird, die Gänge im Getriebe 14 geschaltet werden und das Laststellglied 26, das insbesondere außerhalb von Gangwechseln im Wesentlichen entsprechend der Stellung des Fahrpedals 46 betätigt wird. Bei einem Gangwechsel wird das Laststellglied bei konstanter Fahrpedalstellung kurzzeitig in Richtung einer Rücknahme der Last betätigt. Eine Rücknahme der Last bzw. eine Absenkung des von dem Fahrzeugantriebsmotor abgegebenen Drehmomentes kann auch durch Veränderung des Zündzeitpunktes erreicht werden, wenn der Fahrzeugantriebsmotor als Otto-Motor ausgebildet ist und die elektronische Steuereinrichtung 28 den Betrieb des Zündsteuergerätes steuert.

Für ein komfortables Schalten ist erforderlich, dass das von der Kupplung 12 übertragbare Moment genau gesteuert wird. Dazu ist in der elektronischen Steuereinrichtung 28 eine Kupplungskennlinie abgelegt, die bei vorbestimmten Betriebszuständen adaptiert bzw. aktualisiert wird und das Kupplungsmoment in Abhängigkeit von der Stellung des Kupplungsaktors 20 angibt.

Bei einem Schaltvorgang wird die Kupplung 12 derart betätigt, dass sie beim Auslegen eines Ganges und Einlegen eines neuen Ganges voll geöffnet ist und dann, beispielsweise abhängig von der Stellung des Fahrpedals 46 und gegebenenfalls weiteren Betriebsparametern des Antriebsstrangs, geschlossen wird, bis sie das vom Motor abgegebene Moment zumindest im Wesentlichen schlupffrei überträgt.

Ein Problem, das bei bekannten Gangschaltvorgängen auftritt, besteht darin, dass beispielsweise ausgehend von voll geöffneter Kupplung (übertragbares Kupplungsmoment im Wesentlichen gleich Null) nach Einlegen eines neuen Ganges die Kupplung rasch zur Übertragung eines hohen von dem Antriebsmotor 10 abgegebenen Moments schließt und dabei ihren Greifpunkt innerhalb kurzer Zeit erreicht und überfährt. In der Praxis führt das zu unkomfortablen Schlägen, die bereits auftreten wenn die Kupplung ihren Greifpunkt erreicht und dadurch am Antriebsstrang vorhandene Spiele aufgenommen werden. Dabei kann der aus Gründen der Geräuschisolierung elastisch im Fahrzeugchassis aufgehängte Fahrzeugsantriebsmotor, vorzugsweise eine Brennkraftmaschine, zur Abstützung des vom Antriebsstrang übertragenen Moments in Anlage an die elastischen Grenzen bzw. Anschläge der Motorlagerung kommen.

Aus der DE 40 09 791 A1 ist ein Verfahren zur Unterdrückung von Schwingungen im Antriebsstrang eines von einer Brennkraftmaschine angetriebenen Kraftfahrzeugs bekannt, bei dem der Brennkraftmaschine beim Auftreten von Schwingungen im Antriebsstrang eine in einer Korrektureinrichtung ermittelte, das Antriebsdrehmoment der Brennkraftmaschine verändernde Stellgröße zugeführt wird. Dabei wird aus Drehzahlinformationen ein Drehzahlgradient ermittelt und zur Schwingungsbeurteilung herangezogen. Dies ermöglicht, durch eine phasenrichtige Umschaltung von den Zündzeitpunkten eines in einem Zündsteuergerät abgelegten Zündkennfeldes auf entsprechende Zündzeitpunkte eines zweiten im Zündsteuergerät abgelegten Zündkennfeldes das Antriebsmoment der Brennkraftmaschine derart zu verändern, dass die Schwingungen im Antriebsstrang gedämpft werden.

Der Erfindung liegt die Aufgabe zugrunde, ein Verfahren und eine Vorrichtung zu schaffen, mit dem bzw. der Schaltschläge in einem mit einer automatischen Kupplung versehenen Antriebsstrang eines Fahrzeugs vermieden oder zumindest stark abgeschwächt werden können.

Der Anspruch 1 ist auf ein Verfahren zur Lösung der Erfindungsaufgabe gerichtet.

Überraschenderweise hat sich herausgestellt, dass Schaltschläge deutlich gemildert oder sogar unterdrückt werden können, wenn die Kupplung zumindest bis zu ihrem Tastpunkt und vorzugsweise etwas darüber hinaus mit einem vorbestimmten Geschwindigkeitsverlauf geschlossen wird.

Die Unteransprüche kennzeichnen vorteilhafte Ausführungsformen und Weiterbildungen des erfindungsgemäßen Verfahrens.

Der Anspruch 5 kennzeichnet den grundsätzlichen Aufbau einer Vorrichtung zur Lösung der Erfindungsaufgabe.

Gemäß der Erfindung wird bei einem Verfahren zum Vermindern von Schaltschlägen in einem mit einer automatisierten Kupplung versehenen Antriebsstrang eines Fahrzeugs, die Kupplung zum Einlegen eines neuen Gangs eines in dem Antriebsstrang enthaltenen Schaltgetriebes voll geöffnet und nach Einlegen des neuen Gangs mit einem vorbestimmten Geschwindigkeitsverlauf durch ihren Greifpunkt hindurch geschlossen.

Vorteilhafterweise hängt der vorbestimmte Geschwindigkeitsverlauf von wenigstens einem der folgenden Betriebsparameter des Antriebsstrangs ab: Stellung eines Fahrpedals, eingelegter Gang, Moment eines Fahrzeugantriebsmotors, Drehzahldifferenz an der Kupplung.

Der vorbestimmte Geschwindigkeitsverlauf kann eine vorbestimmte Konstante Geschwindigkeit sein.

Bei einer vorteilhaften Durchführungsform des erfindungsgemäßen Verfahrens wird die Kupplung, sobald nach Durchfahren des Greifpunktes ein vorbestimmtes erstes Kupplungsmoment übertragen ist, mit erhöhter Geschwindigkeit geschlossen, bis ein vorbestimmtes zweites Kupplungsmoment übertragen ist.

Bei einer Durchführungsform des erfindungsgemäßen Verfahrens wird das von einem im Antriebsstrang enthaltenen Fahrzeugantriebsmotor abgegebene Moment während des Öffnens der Kupplung für einen Gangwechsel auf Null oder Schub eingestellt, vom Zeitpunkt des vollen Öffnens der Kupplung bis zum Einlegen des neuen Gangs auf einen Wert von zumindest annähernd Null gestellt und nach dem Einlegen des neuen Gangs, während die Kupplung durch den Greifpunkt hindurch geschlossen wird, mit einem vorbestimmten Geschwindigkeitsverlauf erhöht, wobei die Motordrehzahl nach dem Einlegen des neuen Gangs zumindest bis zum Durchfahren des Greifpunktes der Kupplung bei einer Zugschaltung ständig auf einer höheren Drehzahl als die der Abtriebsseite der Kupplung gehalten wird und bei einer Schubschaltung auf einer niedrigeren Drehzahl als die der Abtriebsseite der Kupplung gehalten wird.

Eine Vorrichtung zum Vermindern von Schaltschlägen in einem mit einer automatischen Kupplung versehenen Antriebsstrang eines Fahrzeugsantriebsmotors enthält eine elektronische Steuereinrichtung mit Eingängen, die mit Sensoren zum Erfassen von Betriebsparametern des Antriebsstrangs verbunden sind, einen Ausgang, der mit einem Kupplungsaktor zum Steuern der Kupplung verbunden ist, einen Ausgang, der mit einem Stellaktor zum Stellen eines Laststellgliedes eines Fahrzeugantriebsmotors verbunden ist, einen Datenspeicher, in dem wenigstens ein dem Aufziehmoment des Antriebsstrangs entsprechender Wert gespeichert ist, und einen Programmspeicher, in dem wenigstens ein Programm zur Durchführung des Verfahrens gesteuert wird.

Die Erfindung wird im Folgenden anhand schematischer Zeichnungen beispielsweise und mit weiteren Einzelheiten erläutert.

In den Figuren zeigen:
- Fig. 1: ein Flussdiagramm zur Erläuterung des erfindungsgemäßen Verfahrens und
- Fig. 2 und 3: Zeitverläufe einer herkömmlichen und einer erfindungsgemäßen Kupplungsbetätigung, und
- Fig. 4: ein bereits beschriebenes Blockschaltbild eines in seinem Aufbau an sich.

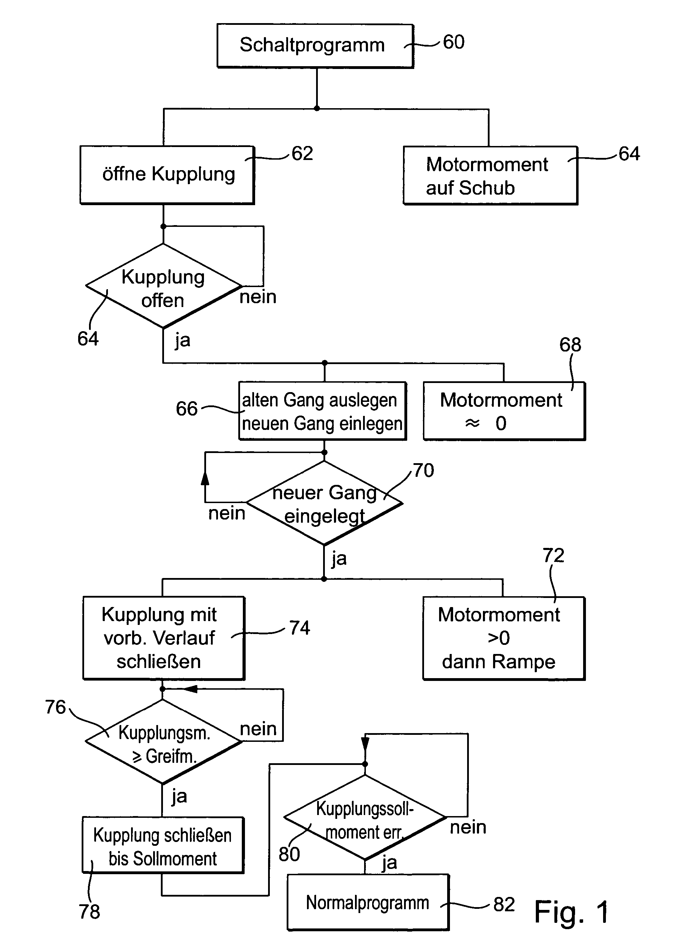

Anhand der Fig. 1, die ein vereinfachtes Flussdiagramm eines erfindungsgemäßen Verfahrens darstellt, wird die Erfindung im Folgenden beispielsweise erläutert:

Sei angenommen, die elektronische Steuereinrichtung 28 (Fig. 2) gibt einen Schaltbefehl, beispielsweise zum Hochschalten vom zweiten in den dritten Gang unter Last.

Mit dem Schaltbefehl wird im Schritt 60 ein Programm zur Durchführung der Schaltung aktiviert, indem zunächst, wie üblich, im Schritt 62 die Kupplung geöffnet und im Wesentlichen gleichzeitig im Schritt 64 die Motorlast bzw. das Motormoment auf Schub gestellt wird, indem beispielsweise die Kraftzufuhr unterbrochen wird. Damit wird erreicht, dass die Motordrehzahl rasch abfällt.

Im Schritt 64 wird überprüft, ob die Kupplung ganz geöffnet ist. Ist dies der Fall, so wird im Schritt 66 die Getriebebetätigungseinrichtung aktiviert und der alter Gang ausgelegt sowie der neue Gang eingelegt. Gleichzeitig wird im Schritt 68 durch entsprechende Betätigung eines Laststellgliedes das Motormoment auf Null gestellt, so dass der Motor mindestens mit seiner Leerlaufdrehzahl läuft. Wenn im Schritt 70 festgestellt wird, dass der neue Gang eingelegt ist, wird im Schritt 72 das Motormoment auf ein Moment größer Null erhöht und dann mit einer vorbestimmten Rampe bzw. zeitlichen Änderung weiter erhöht. Gleichzeitig wird im Schritt 74 die Kupplung zunächst rasch bis in die Nähe ihres Greifpunktes und dann mit einem vorbestimmten Geschwindigkeitsverlauf durch den Greifpunkt hindurch betätigt. Sobald ein vorbestimmtes Kupplungselement erreicht ist, kann die Kupplung mit größerer Geschwindigkeit geschlossen werden, bis ein Kupplungssollmoment erreicht ist, das beispielsweise von der Stellung des Fahrpedals abhängig ist. Das vorzugsweise langsame Schließen der Kupplung durch den Greifpunkt hindurch erfolgt vorzugsweise unter Bedingungen, bei denen bei einer Zugschaltung, insbesondere Zughochschaltung, die motorseitige Drehzahl der Kupplung größer ist als die getriebeseitige Drehzahl, so dass die schließende Kupplung die Tendenz hat, die Motordrehzahl zu senken. Umgekehrt erfolgt der Schritt 74 bei Schubschaltungen, insbesondere Schubschaltungen in einen niedrigeren Gang, unter Bedingungen, bei denen die motorseitige Drehzahl der Kupplung unter der der getriebeseitigen Drehzahl liegt. Der zweckentsprechende Drehzahlverlauf der Motordrehzahl wird jeweils im Schritt 72 festgelegt.

Wenn im Schritt 76 festgestellt wird, dass die Kupplung soweit geschlossen ist, dass das vorbestimmte Kupplungsmoment erreicht wird, das beispielsweise einem Wert entspricht, bei dem die Elastizitäten des Antriebsstrangs weitgehend aufgebraucht sind, der Antriebsstrang also "aufgezogen" ist, wird die Kupplung vorzugsweise mit größerer Betätigungsgeschwindigkeit als im Schritt 76 im Schritt 78 geschlossen bis sie ein Sollmoment überträgt.

Sobald das Kupplungssollmoment erreicht ist (Schritt 80) kehrt das Programm im Schritt 82 zu einem Normalprogramm zurück.

Das vorstehend beschriebene Verfahren wird anhand der Fig. 2 und 3 verdeutlicht, die eine herkömmliche mit einem Schaltvorgang verbundene Kupplungsbetätigung und eine erfindungsgemäße Kupplungsbetätigung im Zeitverlauf darstellen.

Die Ordinate stellt jeweils das übertragbare Kupplungsmoment N dar, wobei GP den Greifpunkt der Kupplung (übertragbares Kupplungsmoment von wenigen Nm) darstellt. Die Abszisse gibt die Zeit an.

Bezug nehmend zunächst auf Fig. 2 erfolgt eine bekannte Kupplungsbetätigung derart, dass, sobald ein neuer Gang eingelegt ist (Zeitpunkt t1) die voll geöffnete Kupplung vorzugsweise so rasch wie es der Kupplungsaktor erlaubt, auf ein Kupplungssollmoment KS geschlossen, das beispielsweise von der Stellung des Fahrpedals und dem neuen Gang abhängig ist. Sobald das Kupplungssollmoment KS erreicht ist, wird die Kupplung anhängig von Betriebsparametern des Fahrzeugantriebsstrangs beispielsweise weiter geschlossen. Ein Problem, das bei einer Kupplungsbetätigung gemäß Fig. 2 auftritt, liegt darin, dass zum Zeitpunkt t1 mehr oder weniger starke Triebstrangschwingungen auftreten, die sich in unangenehmen Fahrzeugbeschleunigungen und Verzögerungen bemerkbar machen.

Anhand der Fig. 3 wird das erfindungsgemäße Verfahren geschildert:
Zum Zeitpunkt t1, das heißt, wenn der neue Gang eingelegt ist, wird die Kupplung zunächst rasch bis annähernd zum Greifpunkt GP geschlossen, so dass sie gerade noch kein Moment überträgt. Wenn der Greifpunkt annähernd erreicht ist, wird die Kupplung mit einer vorbestimmten langsameren Geschwindigkeit geschlossen, wobei der Greifpunkt GP zum Zeitpunkt t2 durchfahren wird, bis zum Zeitpunkt t3 ein Kupplungsmoment Kv übertragbar ist, das einem Moment entspricht, bei dem der Triebstrang aufgezogen ist, das heißt alle Elastizitäten in einer Richtung hin belastet sind. Anschließend wird die Kupplung mit höherer Geschwindigkeit geschlossen, bis zum Zeitpunkt t4 ein beispielsweise von der Stellung des Fahrpedals und dem eingelegten neuen Gang abhängiges Kupplungssollmoment Ks erreicht ist, woraufhin das Programm zum Normalprogramm übergeht.

Der Zeitraum t1 bis t3 entspricht dem Schritt 74 der Fig. 1, der Zeitpunkt t3 bis t4 entspricht dem Schritt 78 der Fig. 1.

In den Fig. 2 und 3 stellt die gestrichelte Linie jeweils eine in der Steuereinrichtung 28 (Fig. 4) errechnete Kupplungssollmomentkurve dar; die durchgezogene Linie stellt den Ist-Verlauf des Kupplungsmoments dar, der dem Soll-Verlauf mit zeitlicher Verzögerung folgt.

Der beschriebene Ablauf kann in vielfältiger Weise verändert werden. Beispielsweise muss im Schritt 64 das Motormoment nicht zwingend auf Schub gestellt werden, sondern kann drehzahlgesteuert beispielsweise bei einer Zughochschaltung auf einem Wert gehalten werden, der der bisherigen Drehzahl im niedrigeren Gang entspricht, so dass der Motor nach Einlegen des neuen Gangs (Schritt 66), indem er dann ebenfalls anstelle des Schritts 68 drehzahlgesteuert wird, im Schritt 72 zunächst weiter auf der vorherigen Drehzahl bleibt und seine Drehzahl dann zunimmt. Damit ist gewährleistet, dass beim Greifen der Kupplung im Schritt 76 bei Zughochschaltungen der gesamte Antriebsstrang sich in einem Zugzustand befindet.

Bei einer Schubschaltung kann das Motormoment während der Schritte 64, 68 und 72 beispielsweise auf Null gehalten werden oder kann die Motordrehzahl derart gesteuert werden, dass sie unter einem Wert liegt, der der Drehzahl im neuen Gang bei voll eingerückter Kupplung liegt.

Im Schritt 72 kann das mit einer Rampe zunehmende Motordrehmoment derart gesteuert werden, dass es maximal bis zu einem Wert zunimmt, der von der Stellung des Fahrpedals abhängt.

Dadurch, dass im Schritt 74 die Kupplung zunächst mit einem vorbestimmten Verlauf schließt bis der Greifpunkt erreicht ist, wird ein weicher und nicht mit Wechselbeanspruchungen verbundener Drehmomenteingriff des Antriebsstrangs erreicht, mit dem Schwingungen im Antriebsstrang vermindert oder sogar vollständig unterdrückt werden können.

Der vorbestimmte Geschwindigkeitsverlauf der Kupplungsbetätigung im Schritt 74 hängt vorteilhafterweise von wenigstens einem der folgenden Betriebsparametern des Antriebsstrangs ab:
- Stellung des Fahrpedals:
   Bei starker Betätigung des Fahrpedals erfolgt die Kupplungsbetätigung zum Erreichen des Greifpunktes rascher.
- Neu eingelegter Gang:
   Bei höherem Gang erfolgt die Kupplungsbetätigung rascher.
- Moment des Fahrzeugantriebsmotors:
   Bei höherem Motormoment zum Zeitpunkt kurz vor dem Erreichen des Greifpunktes erfolgt die Kupplungsbetätigung mit langsamerer Geschwindigkeit, damit der Antriebsstrang nicht stoßartig belastet wird.
- Drehzahldifferenz an der Kupplung:
   Je höher die Drehzahldifferenz am Greifpunkt ist, umso langsamer wird der Greifpunkt angefahren.

Im Schritt 74 muss die Kupplung nicht zwangsläufig zunächst sehr rasch bis annähernd zum Greifpunkt betätigt werden, sondern kann bereits ab dem Zeitpunkt t1 mit dem vorbestimmten verlangsamten Geschwindigkeitsverlauf durch den Greifpunkt hindurch geschlossen werden, insbesondere wenn die Kupplung während des Gangwechselns nicht wesentlich über den Greifpunkt hinaus geöffnet wird. Die gegenüber der Kupplungsbetätigung zwischen den Zeitpunkten t1 und t3 raschere Betätigung zwischen den Zeitpunkten t3 und t4 ist ebenfalls nicht zwingend erforderlich. Sie dient lediglich der Verkürzung der Zeitdauer bis zum Erreichen des Kupplungssollmoments, bei dem auf das Normalprogramm übergegangen wird.

Die Motormomentzunahme im Schritt 72 kann derart erfolgen, dass sie bis zum Erreichen des Greifpunktes der Kupplung langsamer ist als anschließend. Eine rasche Zunahme des Motormoments zu Beginn des Schrittes 72 auf einen Wert größer Null dient dazu, sicher zu stellen, dass bei einer Zughochschaltung die motorseitige Welle der Kupplung rascher dreht als die getriebeseitige.

Ein wesentliches Merkmal des erfindungsgemäßen Verfahrens liegt darin, dass die Kupplung den Greifpunkt mit einem vorbestimmten, gegebenenfalls von Betriebsparametern des Antriebsstrangs abhängigen Geschwindigkeitsverlauf erreicht und gegebenenfalls durchfährt, der ausreichend langsam ist, damit bei der Beaufschlagung des Antriebsstrangs mit einem Moment vom Motor her keine stoßartigen Belastungen und/oder Wechselbeanspruchungen auftreten, die zu Schwingungen führen können.

Die Erfindung kann für automatisierte Schaltgetriebe und für manuell betätigte Schaltgetriebe verwendet werden, wobei bei manuellen Schaltgetrieben ein am Getriebe angebrachter Sensor feststellt, dass ein neuer Gang vollständig eingelegt ist.

### Bezugszeichenliste

- 10: Fahrzeugantriebsmotor
- 12: Kupplung
- 14: Getriebe
- 16: Kardanwelle
- 18: Differenzial
- 20: Kupplungsaktor
- 21: Rad
- 22: Schaltaktor
- 24: Wählaktor
- 26: Aktor
- 28: elektronische Steuereinrichtung
- 30: Ausgänge
- 32: Eingänge
- 34: Drehzahlsensor
- 36: Drehzahlsensor
- 38: Stellungssensor
- 40: Wählhebel
- 42: Fahrprogrammwähleinrichtung
- 44: Stellungssensor
- 46: Fahrpedal

## Patentansprüche

1. Verfahren zum Vermindern von Schaltschlägen in einem mit einer automatisierten Kupplung (12) versehenen Antriebsstrang eines Fahrzeugs,
bei welchem Verfahren die Kupplung zum Einlegen eines neuen Gangs eines in dem Antriebsstrang enthaltenen Schaltgetriebes voll geöffnet und nach Einlegen des neuen Gangs mit einem vorbestimmten Geschwindigkeitsverlauf durch ihren Greifpunkt hindurch geschlossen wird.

2. Verfahren nach Anspruch 1, wobei der vorbestimmte Geschwindigkeitsverlauf wenigstens von einem der folgenden Betriebsparameter des Antriebsstrangs abhängt: Stellung eines Fahrpedals (46), eingelegter Gang, Moment eines Fahrzeugantriebsmotors (10), Drehzahldifferenz an der Kupplung.

3. Verfahren nach Anspruch 1 oder 2, wobei der vorbestimmte Geschwindigkeitsverlauf eine vorbestimmte konstante Geschwindigkeit ist.

4. Verfahren nach einem der Ansprüche 1 bis 3, wobei die Kupplung, sobald nach Durchfahren des Greifpunktes ein vorbestimmtes erstes Kupplungsmoment (Kv) übertragen ist, mit erhöhter Geschwindigkeit geschlossen wird, bis ein vorbestimmtes zweites Kupplungsmoment (K_{S}) übertragen ist.

5. Verfahren nach einem der Ansprüche 1 bis 4, wobei das von einem im Antriebsstrang enthaltenen Fahrzeugantriebsmotor abgegebene Moment während des Öffnens der Kupplung (12) für einen Gangwechsel auf Null oder Schub eingestellt wird, vom Zeitpunkt des vollen Öffnens der Kupplung bis zum Einlegen des neuen Gangs auf einen Wert von zumindest annähernd Null gestellt wird und nach dem Einlegen des neuen Gangs, während die Kupplung durch den Greifpunkt hindurch geschlossen wird, mit einem vorbestimmten Geschwindigkeitsverlauf erhöht wird, wobei die Motordrehzahl nach dem Einlegen des neuen Gangs zumindest bis zum Durchfahren des Greifpunktes der Kupplung bei einer Zugschaltung ständig auf einer höheren Drehzahl als die der Abtriebsseite der Kupplung gehalten wird und bei einer Schubschaltung auf einer niedrigeren Drehzahl als die der Abtriebsseite der Kupplung gehalten wird.

6. Vorrichtung zum Vermindern von Schaltschlägen in einem mit einer automatisierten Kupplung versehenen Antriebsstrang eines Fahrzeugs, enthaltend eine elektronische Steuereinrichtung (28) mit
Eingängen (32), die mit Sensoren (34, 36, 38, 44) zum Erfassen von Betriebsparametern des Antriebsstrangs verbunden sind,
einem Ausgang, der mit einem Kupplungsaktor (20) zum Steuern der Kupplung (12) verbunden ist,
einem Ausgang, der mit einem Stellaktor (26) zum Stellen eines Laststellgliedes eines Fahrzeugantriebsmotors (10) verbunden ist,
einem Datenspeicher, in dem eine dem Greifpunkt der Kupplung entsprechende Stellung des Kupplungsaktors gespeichert ist, und
einem Programmspeicher, in dem wenigstens ein Programm zur Durchführung des Verfahrens nach einem der Ansprüche 1 bis 5 gespeichert ist.
